# EUROPÄISCHE PATENTSCHRIFT

(11) **EP 3 864 682 B1**
(45) Veröffentlichungstag und Bekanntmachung des Hinweises auf die Patenterteilung: **20.03.2024**
(21) Anmeldenummer: 19801485.4
(22) Anmeldetag: 21.10.2019
(51) Int. Cl.: H01H 33/74, H01H 33/70, H01H 33/88

(54) **UNTERBRECHEREINHEIT EINES LEISTUNGSSCHALTERS**
INTERRUPTER UNIT FOR A CIRCUIT BREAKER
UNITÉ COUPE-CIRCUIT D'UN COMMUTATEUR DE PUISSANCE

(30) Priorität: 20.11.2018 DE 102018219832
(43) Veröffentlichungstag der Anmeldung: 18.08.2021
(73) Patentinhaber: Siemens Energy Global GmbH & Co. KG, 81739 München (DE)
(72) Erfinder: REICHERT, Frank, 06667 Weißenfels (DE); WIESINGER, Claudia, 14089 Berlin (DE)
(86) Internationale Anmeldenummer: PCT/EP2019/078499
(87) Internationale Veröffentlichungsnummer: WO 2020/104123

(56) Entgegenhaltungen:
- EP-A1- 0 195 904
- EP-A1- 3 248 203
- DE-A1- 2 812 947
- FR-A1- 2 954 995
- JP-A- 2016 062 679
- KR-B1- 100 857 392

## Beschreibung

Die Erfindung betrifft eine Unterbrechereinheit eines Leistungsschalters, die ein mit einem Löschgas befüllbares gasisoliertes Gehäuse aufweist.

Leistungsschalter weisen Kontaktelemente auf, die zum Öffnen und Schließen eines Stromkreises zwischen einer Ausschaltstellung, in der die Kontaktelemente voneinander getrennt sind, und einer Einschaltstellung, in der Kontaktelemente aneinander anliegen, relativ zueinander bewegbar sind. Ein gasisolierter Leistungsschalter weist eine Unterbrechereinheit auf, die mit einem Löschgas zum Löschen eines Lichtbogens befüllt ist, der bei dem Trennen von Kontaktelementen in einem Lichtbogenbereich der Unterbrechereinheit entsteht. Durch einen Lichtbogen wird das Löschgas in dem Lichtbogenbereich lokal stark erhitzt und dissoziiert zu einem Heißgas. Das Heißgas kann zu lokalen dielektrischen Schwächen des Leistungsschalters führen und wird daher beispielsweise durch Vermischung mit kälterem Löschgas abgekühlt oder/und von dem Lichtbogenbereich in einen dielektrisch weniger kritischen Bereich der Unterbrechereinheit geleitet. Aus der EP0195904A1 ist ein Druckgasschalter zum Schalten von Mittelspannungen bekannt, mit einer Löschgasströmung zum Löschen eines Lichtbogens. Die KR100857392B1, FR2954995A1, EP3248203A1, und DE2812947A1 beschreiben des weiteren Umlenkeinrichtungen für Löschgasströmungen.

Der Erfindung liegt die Aufgabe zugrunde, eine gasisolierte Unterbrechereinheit eines Leistungsschalters anzugeben, die hinsichtlich der Strömungsführung von Heißgas in der Unterbrechereinheit verbessert ist.

Die Aufgabe wird erfindungsgemäß durch die Merkmale des Anspruchs 1 gelöst.

Vorteilhafte Ausgestaltungen der Erfindung sind Gegenstand der abhängigen Ansprüche.

Eine erfindungsgemäße Unterbrechereinheit eines Leistungsschalters umfasst ein mit einem Löschgas befüllbares gasisoliertes Gehäuse und eine in dem Gehäuse angeordnete Gasleitstruktur mit einer Leitröhre und wenigstens einem Umleitelement. Die Leitröhre verläuft rohrartig um eine Längsachse der Unterbrechereinheit zur Leitung von Heißgas, das in einem Lichtbogenbereich der Unterbrechereinheit durch Erhitzung von Löschgas durch einen Lichtbogen entsteht, von dem Lichtbogenbereich weg. Das wenigstens eine Umleitelement ist dazu ausgebildet, aus der Leitröhre austretendes Heißgas in eine um die Längsachse herum verlaufende zirkulare Strömung zu versetzen.

Die Erfindung sieht also eine Strömungsführung von Heißgas in einer Unterbrechereinheit vor, die Heißgas durch eine Leitröhre axial, das heißt entlang der Längsachse der Unterbrechereinheit, von dem Lichtbogenbereich wegleitet und aus der Leitröhre austretendes Heißgas durch wenigstens ein Umleitelement in eine um die Längsachse herum verlaufende zirkulare Strömung versetzt. Dadurch wird Heißgas in einem von dem Lichtbogenbereich entfernten Bereich in dem Gehäuse des Umleitelements durch die zirkulare Strömung mit dort befindlichem kälterem Löschgas vermischt und durch so genannte turbulente Kühlung abgekühlt. Durch die zirkulare Strömung wird das Volumen des Gehäuses der Unterbrechereinheit besser zur Kühlung von Heißgas genutzt und somit die Kühlung des Heißgases verbessert gegenüber einer Kühlung, die nur eine axiale oder radiale Strömung von Heißgas verwendet. Dadurch kann wiederum die dielektrische Festigkeit der Unterbrechereinheit erhöht werden, und die Unterbrechereinheit kann für höhere Ströme ausgelegt werden.

Eine Ausgestaltung der Erfindung sieht ein von einer Röhrenaußenoberfläche der Leitröhre abstehendes bandartiges Umleitelement vor, das helixartig gewunden um die Längsachse herum verläuft. Dabei kann eine an die Röhrenaußenoberfläche grenzende, dem Lichtbogenbereich zugewandte Umleitoberfläche des bandartigen Umleitelements in einem von 90 Grad verschiedenen Abstehwinkel von der Röhrenaußenoberfläche abstehen. Ferner kann die Leitröhre im Bereich des bandartigen Umleitelements seitliche Röhrenöffnungen aufweisen. Insbesondere können die Öffnungsgrößen der seitlichen Röhrenöffnungen mit dem Abstand der Röhrenöffnungen von dem Lichtbogenbereich zunehmen.

Die vorgenannten Ausgestaltungen der Erfindung bewirken eine zirkulare Strömung von Heißgas durch ein helixartig um die Außenoberfläche der Leitröhre verlaufendes bandartiges Umleitelement. Durch einen geeignet gewählten Abstehwinkel kann die zirkulare Strömungsführung optimiert werden. Die Röhrenöffnungen ermöglichen den seitlichen Austritt von Heißgas aus dem Leitrohr zu dem Umleitelement. Die Zunahme der Öffnungsgrößen der seitlichen Röhrenöffnungen mit dem Abstand von dem Lichtbogenbereich bewirkt, dass Heißgas in größeren Mengen erst mit wachsendem Abstand von dem Lichtbogenbereich aus dem Leitrohr austreten kann und somit höchstens geringe Mengen von Heißgas zurück zu dem Lichtbogenbereich gelangen.

Eine weitere Ausgestaltung der Erfindung sieht ein turbinenartiges Umleitelement vor, das ringförmig um ein von dem Lichtbogenbereich abgewandtes offenes Leitröhrenende der Leitröhre verläuft und nach außen von der Leitröhre abstehende Umleitschaufeln aufweist. Beispielsweise weisen die Umleitschaufeln gegen eine zu der Längsachse orthogonale Ebene verkippte Schaufeloberflächen auf. Ferner kann das turbinenartige Umleitelement um die Längsachse drehbar sein.

Die vorgenannten Ausgestaltungen der Erfindung bewirken eine zirkulare Strömung von Heißgas durch ein turbinenartig ausgebildetes Umleitelement. Durch eine geeignet gewählte Verkippung kann die zirkulare Strömungsführung optimiert werden. Durch eine Drehbarkeit des Umleitelements kann die zirkulare Strömung turbulent gekühlt werden.

Die Erfindung sieht ein durch ein von dem Lichtbogenbereich abgewandtes offenes Leitröhrenende in die Leitröhre hineinragendes schneckenartiges Umleitelement mit einer dem Lichtbogenbereich zugewandten Rille vor. Die Rille hat im Wesentlichen die Form einer um die Längsachse herum verlaufenden konischen Spirale, deren Durchmesser sich zu dem Lichtbogenbereich hin verkleinert. Ferner kann ein Trichterelement vorgesehen sein, das lichtbogenbereichsseitig vor dem schneckenartigen Umleitelement in der Leitröhre angeordnet ist und eine Trichteröffnung aufweist, durch die die Längsachse verläuft. Beispielsweise verengt sich das Trichterelement wenigstens in einem um die Trichteröffnung herum verlaufenden Bereich konisch in Richtung zu dem Lichtbogenbereich. Ferner kann die Leitröhre im Bereich des schneckenartigen Umleitelements seitliche Röhrenöffnungen aufweisen. Dabei können die Öffnungsgrößen der seitlichen Röhrenöffnungen mit dem Abstand der Röhrenöffnungen von dem Lichtbogenbereich insbesondere zunehmen.

Die vorgenannten Ausgestaltungen der Erfindung bewirken eine zirkulare Strömung von Heißgas durch ein schneckenartiges Umleitelement mit einer Rille, die die Form einer konischen Spirale hat. Durch das Trichterelement kann Heißgas dem lichtbogenbereichsseitigen Ende der Rille zugeführt werden, so dass das dem Umleitelement zugeführte Heißgas dem Verlauf der Rille von dessen lichtbogenbereichsseitigem Ende folgt und besonders effizient in zirkulare Strömung versetzt wird. Durch die seitlichen Röhrenöffnungen in dem Leitrohr kann zirkular strömendes Heißgas in den Außenbereich des Leitrohrs geleitet werden, um es mit dort befindlichem kälteren Löschgas zu vermischen und dadurch turbulent zu kühlen.

Eine weitere Ausgestaltung der Erfindung sieht vor, dass die Leitröhre von einer Innenoberfläche des Gehäuses beabstandet zwischen dem Lichtbogenbereich und einem Endbereich des Gehäuses angeordnet ist. Dadurch wird Heißgas durch die Leitröhre in einen Endbereich des Gehäuses und damit vorteilhaft weit von dem Lichtbogenbereich weg geleitet.

Ein erfindungsgemäßer Leistungsschalter weist eine erfindungsgemäße Unterbrechereinheit auf. Die Vorteile eines derartigen Leistungsschalter ergeben sich aus den oben genannten Vorteilen einer erfindungsgemäßen Unterbrechereinheit.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: eine Schnittdarstellung einer Unterbrechereinheit eines Leistungsschalters mit einem ersten Beispieleiner Gasleitstruktur,
- FIG 2: eine perspektivische Darstellung der in Figur 1 gezeigten Gasleitstruktur,
- FIG 3: eine Schnittdarstellung einer Unterbrechereinheit eines Leistungsschalters mit einem zweiten Beispieleiner Gasleitstruktur,
- FIG 4: eine perspektivische Darstellung des Umleitelements der in Figur 3 gezeigten Gasleitstruktur,
- FIG 5: eine Schnittdarstellung einer Unterbrechereinheit eines Leistungsschalters mit einem einer erfindungsgemäßen Ausführung einer Gasleitstruktur,
- FIG 6: eine perspektivische Darstellung des Umleitelements der in Figur 5 gezeigten Gasleitstruktur.

Einander entsprechende Teile sind in den Figuren mit denselben Bezugszeichen versehen.

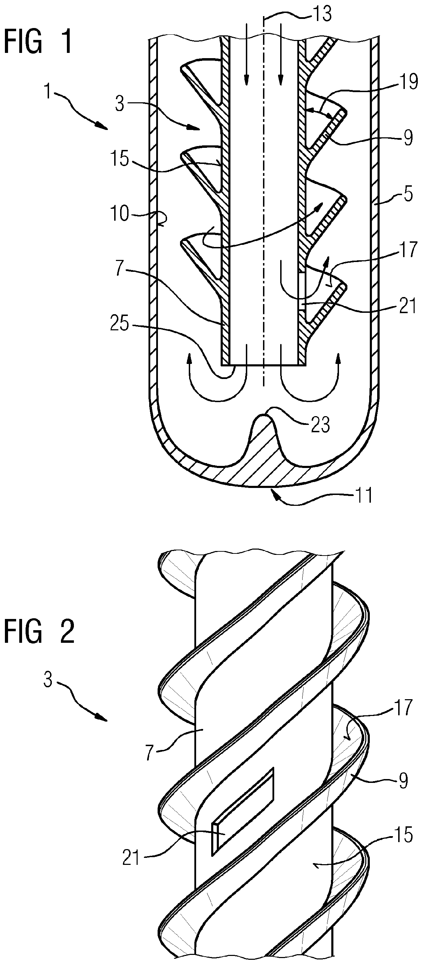

Figur 1 zeigt eine Schnittdarstellung einer Unterbrechereinheit 1 eines Leistungsschalters mit einem ersten Beispiel einer Gasleitstruktur 3, wobei die Unterbrechereinheit 1 nur in einem für die Erfindung relevanten Bereich dargestellt ist. Figur 2 zeigt einen Ausschnitt einer perspektivischen Darstellung der in Figur 1 gezeigten Gasleitstruktur 3.

Die Unterbrechereinheit 1 weist ein mit einem Löschgas befüllbares gasisoliertes Gehäuse 5 auf. In dem Gehäuse 5 sind unter anderem in Figur 1 nicht dargestellte Kontaktelemente angeordnet, die zum Öffnen und Schließen eines Stromkreises zwischen einer Ausschaltstellung, in der die Kontaktelemente voneinander getrennt sind, und einer Einschaltstellung, in der Kontaktelemente aneinander anliegen, relativ zueinander bewegbar sind. Insbesondere weist die Unterbrechereinheit 1 Lichtbogenkontaktelemente auf, zwischen denen beim Trennen in einem Lichtbogenbereich der Unterbrechereinheit 1 ein Lichtbogen brennt.

Die Gasleitstruktur 1 weist eine Leitröhre 7 und ein bandartiges Umleitelement 9 auf. Die Leitröhre 7 ist von einer Innenoberfläche 10 des Gehäuses 5 beabstandet zwischen dem Lichtbogenbereich und einem Endbereich 11 des Gehäuses 5 angeordnet. Die Leitröhre 7 verläuft rohrartig um eine Längsachse 13 der Unterbrechereinheit 1 zur Leitung von Heißgas, das in dem Lichtbogenbereich durch Erhitzung von Löschgas durch einen Lichtbogen entsteht.

Das Umleitelement 9 steht von einer Röhrenaußenoberfläche 15 der Leitröhre 7 ab und verläuft helixartig gewunden um die Längsachse 13 herum. Eine an die Röhrenaußenoberfläche 15 grenzende, dem Lichtbogenbereich zugewandte Umleitoberfläche 17 des Umleitelements 9 steht in einem von 90 Grad verschiedenen Abstehwinkel 19 von der Röhrenaußenoberfläche 15 ab. In dem in Figur 1 gezeigten Beispiel ist der Abstehwinkel 19 kleiner als 90 Grad. Alternativ kann der Abstehwinkel 19 jedoch auch größer als 90 Grad sein.

Die Leitröhre 7 weist im Bereich des bandartigen Umleitelements 9 seitliche Röhrenöffnungen 21 auf. Die Öffnungsgrößen dieser Röhrenöffnungen 21 nehmen mit dem Abstand der Röhrenöffnungen 21 von dem Lichtbogenbereich zu. Die Innenoberfläche 10 des Gehäuses 5 weist in dem Endbereich 11 des Gehäuses 5 eine Wölbung 23 auf, die einem offenen Leitröhrenende 25 der Leitröhre 7 zugewandt ist.

Heißgas strömt von dem Lichtbogenbereich im Wesentlichen axial, das heißt entlang der Längsachse 13, durch die Leitröhre 7. Ein Teil des durch die Leitröhre 7 strömenden Heißgases tritt aus den seitlchen Röhrenöffnungen 21 aus der Leitröhre 7 zu dem Umleitelement 9 hin aus. Der andere Teil des Heißgases tritt aus dem Leitröhrenende 25 der Leitröhre 7 aus und wird durch die Innenoberfläche 10 des Gehäuses 5 zu dem Umleitelement 9 hin geleitet. Durch das Umleitelement 9 wird aus der Leitröhre 7 austretendes Heißgas außerhalb der Leitröhre 7 in eine helixartig um die Längsachse 13 verlaufende zirkulare Strömung versetzt und mit dort befindlichem kälterem Löschgas vermischt, wodurch das Heißgas durch so genannte turbulente Kühlung abgekühlt wird. Strömungsrichtungen der Strömung des Heißgases sind in Figur 1 mit Pfeilen angedeutet.

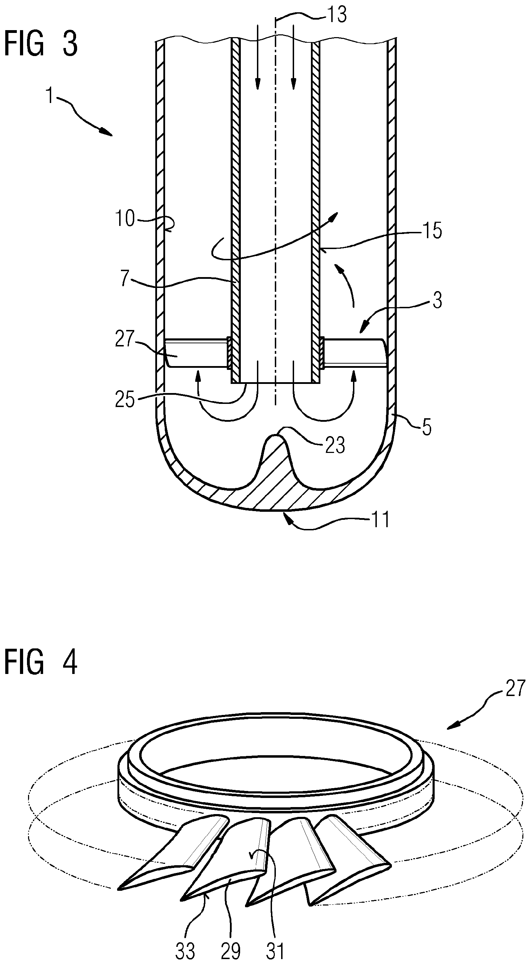

Figur 3 zeigt eine Schnittdarstellung einer Unterbrechereinheit 1 eines Leistungsschalters mit einem zweiten Beispiel einer Gasleitstruktur 3, wobei die Unterbrechereinheit 1 wiederum nur in einem für die Erfindung relevanten Bereich dargestellt ist.

Die Gasleitstruktur 1 weist eine Leitröhre 7 und ein turbinenartiges Umleitelement 27 auf. Die Leitröhre 7 ist wie in dem in Figur 1 gezeigten Beispiel von einer Innenoberfläche 10 des Gehäuses 5 der Unterbrechereinheit 1 beabstandet zwischen dem Lichtbogenbereich und einem Endbereich 11 des Gehäuses 5 angeordnet und verläuft rohrartig um die Längsachse 13 der Unterbrechereinheit 1.

Figur 4 zeigt eine perspektivische Darstellung des Umleitelements 27. Das Umleitelement 27 verläuft ringförmig um das von dem Lichtbogenbereich abgewandte offene Leitröhrenende 25 der Leitröhre 7 und weist nach außen von der Leitröhre 7 abstehende Umleitschaufeln 29 auf. Die Umleitschaufeln 29 weisen gegen eine zu der Längsachse 13 orthogonale Ebene verkippte Schaufeloberflächen 31, 33 auf. Das Umleitelement 27 kann ortsfest gegenüber der Leitröhre 7 angeordnet oder um die Längsachse 13 drehbar ausgebildet sein.

Die Innenoberfläche 10 des Gehäuses 5 weist in dem Endbereich 11 des Gehäuses 5 eine Wölbung 23 auf, die dem offenen Leitröhrenende 25 der Leitröhre 7 zugewandt ist.

Heißgas strömt von dem Lichtbogenbereich im Wesentlichen axial durch die Leitröhre 7, tritt aus dem Leitröhrenende 25 aus der Leitröhre 7 aus und wird durch die Innenoberfläche 10 des Gehäuses 5 zu dem Umleitelement 27 hin geleitet. Durch das Umleitelement 27 wird das Heißgas außerhalb der Leitröhre 7 in eine helixartig um die Längsachse 13 verlaufende zirkulare Strömung versetzt und mit dort befindlichem kälterem Löschgas vermischt, wodurch das Heißgas durch turbulente Kühlung abgekühlt wird. Auch in Figur 3 sind Strömungsrichtungen der Strömung des Heißgases mit Pfeilen angedeutet.

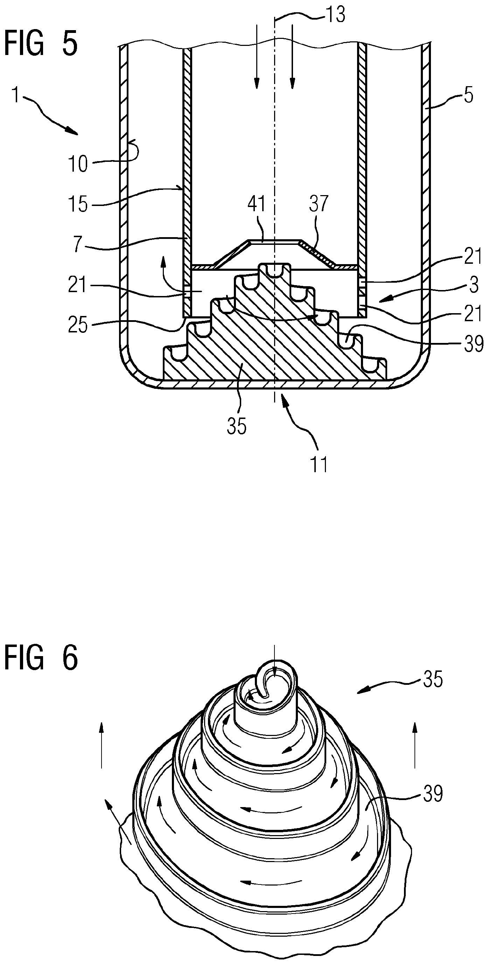

Figur 5 zeigt eine Schnittdarstellung einer Unterbrechereinheit 1 eines Leistungsschalters mit einem erfindungsfemäßen Ausführungsbeispiel einer Gasleitstruktur 3, wobei die Unterbrechereinheit 1 wiederum nur in einem für die Erfindung relevanten Bereich dargestellt ist.

Die Gasleitstruktur 1 weist eine Leitröhre 7, ein schneckenartiges Umleitelement 35 und ein Trichterelement 37 auf. Die Leitröhre 7 ist wie in dem in Figur 1 gezeigten Beispiel von einer Innenoberfläche 10 des Gehäuses 5 der Unterbrechereinheit 1 beabstandet zwischen dem Lichtbogenbereich und einem Endbereich 11 des Gehäuses 5 angeordnet und verläuft rohrartig um die Längsachse 13 der Unterbrechereinheit 1.

Figur 6 zeigt eine perspektivische Darstellung des Umleitelements 35. Das Umleitelement 35 ist in dem Gehäuse 5 an dessen Endbereich 11 angeordnet und ragt durch das von dem Lichtbogenbereich abgewandte offene Leitröhrenende 25 in die Leitröhre 7 hinein. Das Umleitelement 35 weist eine dem Lichtbogenbereich zugewandte Rille 39 auf, die im Wesentlichen die Form einer um die Längsachse 13 herum verlaufenden konischen Spirale hat, deren Durchmesser sich zu dem Lichtbogenbereich hin verkleinert.

Das Trichterelement 37 ist lichtbogenbereichsseitig vor dem Umleitelement 35 in der Leitröhre 7 angeordnet und weist eine Trichteröffnung 41 auf, durch die die Längsachse 13 verläuft. Das Trichterelement 37 verengt sich in einem um die Trichteröffnung 41 herum verlaufenden Bereich konisch in Richtung zu dem Lichtbogenbereich.

Die Leitröhre 7 weist im Bereich des Umleitelements 35 zwischen dem Trichterelement 37 und dem Endbereich 11 des Gehäuses 5 seitliche Röhrenöffnungen 21 auf. Die Öffnungsgrößen dieser Röhrenöffnungen 21 nehmen mit dem Abstand der Röhrenöffnungen 21 von dem Lichtbogenbereich zu.

Heißgas strömt von dem Lichtbogenbereich im Wesentlichen axial durch die Leitröhre 7 zu dem Trichterelement 37 und durch Trichteröffnung 41 zu dem Umleitelement 35. Durch die Rille 39 des Umleitelements 35 wird das Heißgas in eine der Rille 39 folgende zirkulare Strömung um die Längsachse 13 versetzt. Ein Teil des Heißgases tritt aus den seitlichen Röhrenöffnungen 21 aus der Leitröhre 7 aus. Der andere Teil des Heißgases tritt aus dem Leitröhrenende 25 der Leitröhre 7 aus. Außerhalb der Leitröhre 7 strömt Heißgas zirkular um die Längsachse 13 und wird mit dort befindlichem kälterem Löschgas vermischt, wodurch das Heißgas durch turbulente Kühlung abgekühlt wird. Strömungsrichtungen der Strömung des Heißgases sind in den Figuren 5 und 6 wiederum mit Pfeilen angedeutet.

Die in den Figuren 1 bis 4 gezeigten Beispiele können auch mit dem erfindungsgemäßen Ausführungsbeispiel der Figuren 5 und 6 kombiniert werden. Beispielsweise kann das Leitrohr 7 in den Figuren 5 und 6 gezeigten Ausführungsbeispiels einen Abschnitt aufweisen, an dem ein in den Figuren 1 und 2 gezeigtes bandartiges Umleitelement 9 angeordnet ist.

## Patentansprüche

1. Unterbrechereinheit (1) eines Leistungsschalters, die Unterbrechereinheit (1) umfassend
- ein mit einem Löschgas befüllbares gasisoliertes Gehäuse (5) und
- eine in dem Gehäuse (5) angeordnete Gasleitstruktur (3) mit einer Leitröhre (7) und wenigstens einem Umleitelement (9, 27, 35), wobei
- die Leitröhre (7) rohrartig um eine Längsachse (13) der Unterbrechereinheit (1) zur Leitung von Heißgas, das in einem Lichtbogenbereich der Unterbrechereinheit (1) durch Erhitzung von Löschgas durch einen Lichtbogen entsteht, von dem Lichtbogenbereich weg verläuft und
- das wenigstens eine Umleitelement (9, 27, 35) dazu ausgebildet ist, aus der Leitröhre (7) austretendes Heißgas in eine um die Längsachse (13) herum verlaufende zirkulare Strömung zu versetzen,
**dadurch gekennzeichnet, dass**
die Unterbrechereinheit (1) ein durch ein von dem Lichtbogenbereich abgewandtes offenes Leitröhrenende (25) der Leitröhre (7) in die Leitröhre (7) hineinragendes schneckenartiges Umleitelement (35) mit einer dem Lichtbogenbereich zugewandten Rille (39) aufweist, die im Wesentlichen die Form einer um die Längsachse (13) herum verlaufenden konischen Spirale hat, deren Durchmesser sich zu dem Lichtbogenbereich hin verkleinert.

2. Unterbrechereinheit (1) nach Anspruch 1
mit einem von einer Röhrenaußenoberfläche (15) der Leitröhre (7) abstehenden bandartigen Umleitelement (9), das helixartig gewunden um die Längsachse (13) herum verläuft.

3. Unterbrechereinheit (1) nach Anspruch 2,
wobei eine an die Röhrenaußenoberfläche (15) grenzende, dem Lichtbogenbereich zugewandte Umleitoberfläche (17) des bandartigen Umleitelements (9) in einem von 90 Grad verschiedenen Abstehwinkel (19) von der Röhrenaußenoberfläche (15) absteht.

4. Unterbrechereinheit (1) nach Anspruch 2 oder 3,
wobei die Leitröhre (7) im Bereich des bandartigen Umleitelements (9) seitliche Röhrenöffnungen (21) aufweist.

5. Unterbrechereinheit (1) nach Anspruch 4,
wobei die Öffnungsgrößen der seitlichen Röhrenöffnungen (21) mit dem Abstand der Röhrenöffnungen (21) von dem Lichtbogenbereich zunehmen.

6. Unterbrechereinheit (1) nach einem der vorhergehenden Ansprüche
mit einem turbinenartigen Umleitelement (27), das ringförmig um ein von dem Lichtbogenbereich abgewandtes offenes Leitröhrenende (25) der Leitröhre (7) verläuft und nach außen von der Leitröhre (7) abstehende Umleitschaufeln (29) aufweist.

7. Unterbrechereinheit (1) nach Anspruch 6,
wobei die Umleitschaufeln (29) gegen eine zu der Längsachse (13) orthogonale Ebene verkippte Schaufeloberflächen (31, 33) aufweisen.

8. Unterbrechereinheit (1) nach Anspruch 6 oder 7,
wobei das turbinenartige Umleitelement (27) um die Längsachse (13) drehbar ist.

9. Unterbrechereinheit (1) nach Anspruch 1
mit einem Trichterelement (37), das lichtbogenbereichsseitig vor dem schneckenartigen Umleitelement (35) in der Leitröhre (7) angeordnet ist und eine Trichteröffnung (41) aufweist, durch die die Längsachse (13) verläuft.

10. Unterbrechereinheit (1) nach Anspruch 9,
wobei sich das Trichterelement (37) wenigstens in einem um die Trichteröffnung (41) herum verlaufenden Bereich in Richtung zu dem Lichtbogenbereich konisch verengt.

11. Unterbrechereinheit (1) nach einem der Ansprüche 1 bis 10,
wobei die Leitröhre (7) im Bereich des schneckenartigen Umleitelements (35) seitliche Röhrenöffnungen (21) aufweist.

12. Unterbrechereinheit (1) nach Anspruch 11,
wobei die Öffnungsgrößen der seitlichen Röhrenöffnungen (21) mit dem Abstand der Röhrenöffnungen (21) von dem Lichtbogenbereich zunehmen.

13. Unterbrechereinheit (1) nach einem der vorhergehenden Ansprüche,
wobei die Leitröhre (7) von einer Innenoberfläche des Gehäuses (5) beabstandet zwischen dem Lichtbogenbereich und einem Endbereich (11) des Gehäuses (5) angeordnet ist.

14. Leistungsschalter mit einer gemäß einem der vorhergehenden Ansprüche ausgebildeten Unterbrechereinheit (1).

## Claims

1. Interrupter unit (1) for a circuit breaker, the interrupter unit (1) comprising
- a gas-insulated housing (5), which is fillable with a quenching gas, and
- a gas-guiding structure (3), which is arranged in the housing (5) and has a guide tube (7) and at least one diverting element (9, 27, 35), wherein
- the guide tube (7) runs in a tubular manner about a longitudinal axis (13) of the interrupter unit (1) in order to guide hot gas, which is created in an electric arc region of the interrupter unit (1) by heating quenching gas by an electric arc, away from the electric arc region, and
- the at least one diverting element (9, 27, 35) is designed to set hot gas exiting from the guide tube (7) in a circular flow running around the longitudinal axis (13),
**characterized in that**
the interrupter unit (1) has a snail-like diverting element (35) which projects through an open guide tube end (25) of the guide tube (7), which guide tube end is averted from the electric arc region, into the guide tube (7) and has a groove (39) which faces the electric arc region and is substantially in the form of a conical spiral which runs around the longitudinal axis (13) and the diameter of which decreases in the direction of the electric arc region.

2. Interrupter unit (1) according to Claim 1, having a strip-like diverting element (9), which projects from a tube outer surface (15) of the guide tube (7) and runs around the longitudinal axis (13) in a helically wound manner.

3. Interrupter unit (1) according to Claim 2, wherein a diverting surface (17) of the strip-like diverting element (9), which diverting surface adjoins the tube outer surface (15) and faces the electric arc region, projects from the tube outer surface (15) at a projection angle (19) that is different from 90 degrees.

4. Interrupter unit (1) according to Claim 2 or 3, wherein the guide tube (7) has lateral tube openings (21) in the region of the strip-like diverting element (9).

5. Interrupter unit (1) according to Claim 4, wherein the opening sizes of the lateral tube openings (21) increase as the distance of the tube openings (21) from the electric arc region increases.

6. Interrupter unit (1) according to one of the preceding claims, having a turbine-like diverting element (27) which runs in an annular manner about an open guide tube end (25) of the guide tube (7), which guide tube end is averted from the electric arc region, and has diverting blades (29), which project outward from the guide tube (7).

7. Interrupter unit (1) according to Claim 6, wherein the diverting blades (29) have blade surfaces (31, 33) which are tilted in relation to a plane that is orthogonal to the longitudinal axis (13).

8. Interrupter unit (1) according to Claim 6 or 7, wherein the turbine-like diverting element (27) is rotatable about the longitudinal axis (13).

9. Interrupter unit (1) according to Claim 1, having a funnel element (37) which is arranged in front of the snail-like diverting element (35) on the electric arc region-side in the guide tube (7) and has a funnel opening (41), through which the longitudinal axis (13) runs.

10. Interrupter unit (1) according to Claim 9, wherein the funnel element (37) tapers conically in the direction of the electric arc region at least in a region that runs around the funnel opening (41).

11. Interrupter unit (1) according to one of Claims 1 to 10, wherein the guide tube (7) has lateral tube openings (21) in the region of the snail-like diverting element (35).

12. Interrupter unit (1) according to Claim 11, wherein the opening sizes of the lateral tube openings (21) increase as the distance of the tube openings (21) from the electric arc region increases.

13. Interrupter unit (1) according to one of the preceding claims, wherein the guide tube (7) is arranged between the electric arc region and an end region (11) of the housing (5) at a distance from an inner surface of the housing (5).

14. Circuit breaker having an interrupter unit (1) which is designed according to one of the preceding claims.

## Revendications

1. Unité (1) de coupe-circuit d'un disjoncteur, l'unité (1) de coupe-circuit comprenant
- un boîtier (5) à isolation par du gaz pouvant être rempli d'un gaz d'extinction et
- une structure (3) de conduite de gaz, qui est disposée dans le boîtier (5) et qui a un tube (7) de conduite et au moins un élément (9, 27, 35) de déviation, dans laquelle
- le tube (7) de conduite s'étend à la manière d'un tube autour d'un axe (13) longitudinal de l'unité (1) de coupe-circuit pour la conduite de gaz chaud, qui se crée dans une partie d'arc électrique de l'unité (1) de coupe-circuit par chauffage de gaz d'extinction par un arc électrique, en s'éloignant de la partie d'arc électrique, et
- le au moins un élément (9, 27, 35) de déviation est constitué pour transformer du gaz chaud sortant du tube (7) de conduite en un écoulement circulaire s'étendant autour de l'axe (13) longitudinal,
**caractérisé en ce que**
l'unité (1) de coupe-circuit a un élément (35) de déviation de type à vis pénétrant dans le tube (7) de conduite par une extrémité (25) ouverte du tube (7) de conduite, non tournée vers la partie d'arc électrique, et ayant une rainure (39), qui est tournée vers la partie d'arc électrique et qui a sensiblement la forme d'une spirale conique s'étendant autour de l'axe (13) longitudinal, dont le diamètre diminue vers la partie d'arc électrique.

2. Unité (1) de coupe-circuit suivant la revendication 1,
comprenant un élément (9) de conduite de type en bande partant d'une surface (15) extérieure du tube (7) de conduite et s'étendant en étant enroulé en hélice autour de l'axe (13) longitudinal.

3. Unité (1) de coupe-circuit suivant la revendication 2,
dans laquelle une surface (17) de déviation, voisine de la surface (15) extérieure du tube et tournée vers la partie d'arc électrique, de l'élément (9) de conduite de type en bande, est issue de la surface (15) extérieure du tube suivant un angle (19) différent de 90°.

4. Unité (1) de coupe-circuit suivant la revendication 2 ou 3, **caractérisée en ce que** le tube (7) de conduite a des ouvertures (21) latérales dans la partie de l'élément (9) de conduite de type en bande.

5. Unité (1) de coupe-circuit suivant la revendication 4,
dans laquelle les dimensions des ouvertures (21) latérales augmentent avec la distance des ouvertures (21) à la partie d'arc électrique.

6. Unité (1) de coupe-circuit suivant l'une des revendications précédentes,
comprenant un élément (27) de déviation de type à turbine, qui s'étend annulairement autour d'une extrémité (25), ouverte, non tournée vers la partie d'arc électrique, du tube (7) de conduite et qui a des aubes (29) de déviation en saillie vers l'extérieur du tube (7) de conduite.

7. Unité (1) de coupe-circuit suivant la revendication 6,
dans laquelle les aubes (29) de déviation ont des surfaces (31, 33) d'aube inclinées par rapport à un plan orthogonal à l'axe (13) longitudinal.

8. Unité (1) de coupe-circuit suivant la revendication 6 ou 7, dans laquelle l'élément (27) de déviation de type à turbine est tournant autour de l'axe (13) longitudinal.

9. Unité (1) de coupe-circuit suivant la revendication 1,
comprenant un élément (37) d'entonnoir, qui est disposé du côté de la partie d'arc électrique dans le tube (7) de conduite, avant un élément (35) de déviation de type à vis et qui a une ouverture (41) d'entonnoir, dans laquelle passe l'axe (13) longitudinal.

10. Unité (1) de coupe-circuit suivant la revendication 9,
dans laquelle l'élément (37) d'entonnoir se rétrécit coniquement dans la direction allant vers la partie d'arc électrique au moins dans une partie s'étendant autour de l'ouverture (41) de l'entonnoir.

11. Unité (1) de coupe-circuit suivant l'une des revendications 1 à 10,
dans laquelle le tube (7) de conduite a des ouvertures (21) latérales dans la partie de l'élément (35) de déviation de type à vis.

12. Unité (1) de coupe-circuit suivant la revendication 11,
dans laquelle les dimensions des ouvertures (21) latérales augmentent avec la distance des ouvertures (21) à la partie d'arc électrique.

13. Unité (1) de coupe-circuit suivant l'une des revendications précédentes,
dans laquelle le tube (7) de conduite est disposé à distance d'une surface intérieure du boîtier (5) entre la partie d'arc électrique et une partie (11) d'extrémité du boîtier (5).

14. Disjoncteur comprenant une unité (1) de coupe-circuit constitué suivant l'une des revendications précédentes.
